Europäisches Patentamt

European Patent Office

Office européen des brevets

(11) Publication number: **0 167 871**
**B1**

(12) EUROPEAN PATENT SPECIFICATION

(45) Date of publication of patent specification: **13.12.89**

(51) Int. Cl.⁴: **C 03 B 9/38**

(21) Application number: **85107303.1**

(22) Date of filing: **30.08.83**

(60) Publication number of the earlier application in accordance with Art. 76 EPC: **0 102 820**

(54) **Method of cooling a mould of a cyclicly operating glassware forming machine.**

(30) Priority: **03.09.82 GB 8225188**
**17.03.83 GB 8307462**

(43) Date of publication of application:
**15.01.86 Bulletin 86/03**

(45) Publication of the grant of the patent:
**13.12.89 Bulletin 89/50**

(84) Designated Contracting States:
**AT BE CH DE FR GB IT LI NL SE**

(56) References cited:
**EP-A-0 050 764**
**EP-A-0 052 223**
**DE-C-3 123 488**
**FR-A-2 321 376**
**US-A-3 355 277**

**SOVIET INVENTIONS ILLUSTRATED, Section
Chemical, Week D39, 4 th November 1981,
abstract no. 71405 D39, class L01, Derwent
Publications Ltd., London, GB; & SU - A - 79 4
020 (GLASS EQUIP DES.) 07-01-1981**

(73) Proprietor: **EMHART INDUSTRIES, INC.**
**426 Colt Highway**
**Farmington Connecticut 06032 (US)**

(72) Inventor: **Foster, Thomas Vincent**
**10 Meaburn close Cantley**
**Doncaster&Sth. Yorkshire (GB)**
Inventor: **Jones, Stanley Peter**
**Strafford House Bride Church Lane**
**Tickhill Nr. Doncaster Sth. Yorkshire (GB)**

(74) Representative: **Randall, John Walter et al**
**Emhart Patents Department Lyn House 39 The
Parade**
**Oadby, Leicester LE2 5BB (GB)**

Courier Press, Leamington Spa, England.

## Description

This invention is concerned with a method of cooling a mould of a cyclically operating glassware forming machine, the mould comprising a bottom plate defining a bottom portion of a cavity of the mould in which molten glass is moulded in the operation of the machine, and two side portions defining side portions of the cavity, each side portion being movable in a cycle of operation of the machine between mould-open and mould-closed positions thereof, the side portions defining cooling passages passing upwardly through the side portions (see e.g. US—A—4251253).

In a glass container manufacturing machine of the so-called "individual section" type, a number of container making units or sections are arranged side by side, are fed with glass from a common source, and feed their output to a common conveyor. Each of these sections has at least one parison mould in which a parison is formed from a gob of molten glass delivered to the mould, and at least one blow mould in which parisons are blown to the shape of the container. The blow mould comprises a stationary bottom plate which defines a bottom portion of a cavity of the mould and two side portions defining side portions of the cavity. The two side portions are mounted on supporting arms which are movable to move the side portions towards one another into a first, closed, position in which the side portions engage the bottom plate and each other so that a parison is enclosed in the cavity defined by the side portions and the bottom plate. The arms are also movable to move the side portions away from one another into a second, open, position to allow moulded articles to be removed from the mould.

Since the moulds of an individual section type machine absorb heat from the glass at a rate which is faster than the heat can be dissipated to the surrounding atmosphere without additional cooling, such moulds are cooled so that the mould remains at a substantially constant average temperature during successive operations of the machine. Because these sections of an individual section type machine need to be close together, for reasons of glass supply, only very limited space is available around the mould for the provision of cooling means. One solution to this problem is to feed cooling air through the frame of the machine section to a vertical cooling stack which is provided with nozzles which direct the air on to the outside of the mould. This solution, however, has the disadvantage that the arms supporting the side portions of the mould interfere with the flow of air to the mould and also that it is difficult to provide differential cooling around the mould as is desirable. Furthermore, such cooling stacks are a source of undesirable noise. In another type of cooling, cooling air is supplied through the supporting arms of the side portions of the mould to a chamber around the mould. In this method the disadvantage arises that it requires expensive machining of the arms, to allow both for the movement of the arms and for the flow of the cooling air. Furthermore, a seal has to be provided between the arm and the side portion of the mould which causes delays in changing moulds and increases the cost of the mould. It is also difficult to provide differential cooling around the mould. Attempts have also been made to cool moulds by passing cooling air through passages in side portions thereof. Examples can be found in U.K. Patent Specification No. 1337292 and U.S. Patent Specification No. 4251253 (Figures 10 to 12). In these methods, air is brought through the supporting arms to the passages through pipes. Thus, expensive machining of the arms is required and also pipe connections are involved between the arms and the side portions thereby causing delay in mould changes and increasing the cost of the moulds. Furthermore, the cooling air makes sharp changes of direction in the supporting arms and in the mould so that considerable resistance to air flow is created requiring the use of high pressure air to achieve adequate air flow. The use of high pressure air is undesirable because of the expense involved. Furthermore, non-uniform air flow is created distorting the cooling effect and making it difficult to predict. Thus, it becomes difficult to predict where to position the cooling passages to achieve the optimum cooling effect. If the passages are not initially correctly positioned, the cooling effect can be adjusted by inserting plugs or insulating sleeves into the passages but this is a time-consuming trial-and-error method because the effects of the plugs and/or sleeves is again hard to predict.

It is an object of the present invention to provide a method of cooling a mould of a cyclically operating glassware forming machine in which passages in the side portions of the mould are supplied with cooling air so that a consistent and predictable cooling effect is achieved.

The invention provides a method of cooling a mould of a cyclically operating glassware forming machine, the mould comprising a bottom plate defining a bottom portion of a cavity of the mould in which molten glass is moulded in the operation of the machine, and two side portions defining side portions of the cavity, each side portion being movable in a cycle of operation of the machine between mould-open and mould-closed positions thereof, characterised in that the side portions define cooling passages passing straight upwardly through the side portions and air at substantially uniform pressure is provided at all the entrances to the cooling passages in the bottom surfaces of the side portions when the side portions are in their closed and/or their open positions so that the air passes into the cooling passages and flows therethrough cooling the side portions, whereby a consistent and predictable cooling effect is achieved.

In a method in accordance with the last preceding paragraph, air flows through the cooling passages without passing through the side portion supporting arms or pipe connections to the side portions. Furthermore, the cooling effect is consistent and easy to predict. The distribution of cooling passages can control the distribution of cooling around the cavity as determined by mathematical models constructed to obtain an optimum cooling distribution.

The passages in the side portions of the mould may be formed by bores through the side portions themselves or by spaces between fins of the side portions, in which case, the open side of the space may be closed by an external jacket attached to the side portion to prevent air escaping from the passage.

Although the air may be supplied to the cooling passages when the side portions are in their open or closed positions, the side portions are generally in their closed position for a greater proportion of the machines cycle than they are in their open position. Furthermore, when in their closed position, the side portions engage one another making it easier for one air supply to supply cooling passages in both side portions. Accordingly it is advantageous if the air is provided beneath the closed position of both side portions of the mould.

In order to achieve better control of the cooling by enabling the cooling period to be varied and also to prevent cooling air from impinging directly on molten glass when the mould is open, it is advantageous if the air is provided for an adjustable time while the side portions are in their closed and/or open positions.

The air may be provided at a pressure of below 13729 Pa (2 lbs per square inch or 1400 mm of water). This provides suitable operating air pressure whereby uniform air flow is promoted.

There now follow detailed descriptions, to be read with reference to the accompanying drawings, of four methods of cooling a mould of a cyclically operating glassware forming machine which are illustrative of the invention. It is to be understood that the illustrative methods have been selected for description by way of example and not of limitation of the invention.

In the drawings:

Figure 1 is a side elevational view of a first illustrative mould arrangement which is used in the first illustrative method with parts broken away to show the construction;

Figure 2 is a plan view with parts broken away of the first illustrative mould arrangement with the mould thereof removed, the direction of view of Figure 1 is indicated by the arrow I in Figure 2;

Figure 3 is a partial side elevational view of a second illustrative mould arrangement used in the second illustrative method with parts broken away to show the construction;

Figure 4 is a vertical cross-sectional view of a third illustrative mould arrangement used in the third illustrative method;

Figure 5 is a view similar to Figure 4 showing a fourth illustrative mould arrangement used in the fourth illustrative method; and

Figure 6 is a view taken on the line VI—VI in Figure 5.

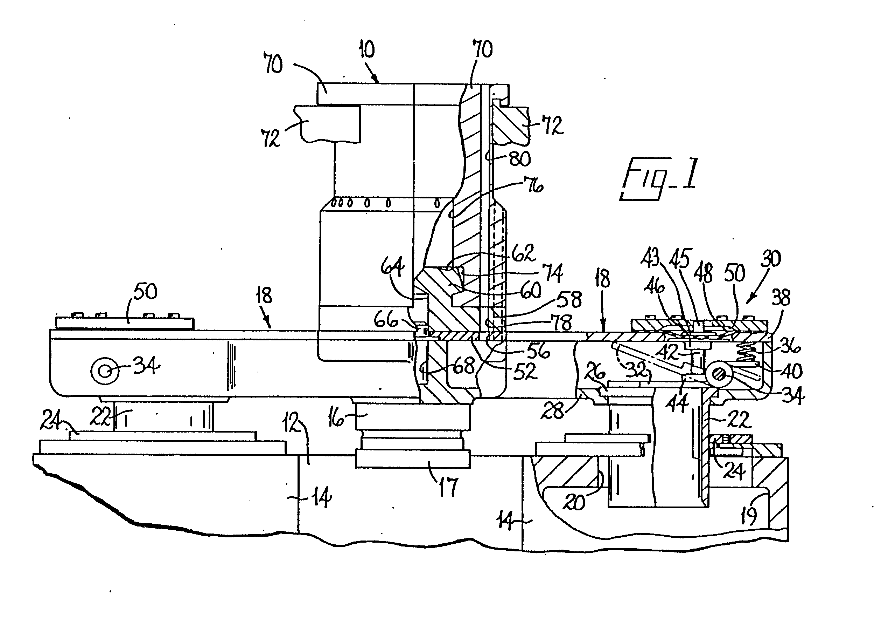

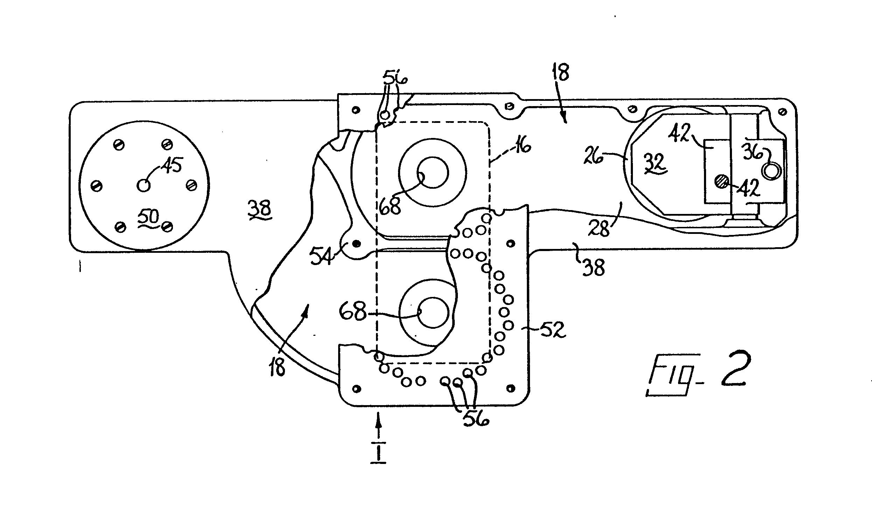

The first illustrative mould arrangement (shown in Figures 1 and 2) is used in the first illustrative method of cooling a mould of a cyclically operating glassware forming machine.

The first illustrative mould arrangement comprises two identical moulds 10 arranged side by side along a longitudinal axis of a section of a cyclically operating glassware forming machine of the individual section type (only one of the moulds 10 is visible in Figure 1). The first illustrative mould arrangement is mounted on the frame 12 of the machine and is supplied with cooling air through two hollow arms 14 of the frame 12 which are disposed transversely of one of the moulds 10.

An adaptor plate 16 having a fixing 17 of the first illustrative mould arrangement is mounted by clamping means (not shown) engaging the fixing 17 on a bottom plate mechanism (not shown) which is vertically adjustable on the frame 12 in a well-known manner. The adaptor plate 16 has the function of distributing vacuum ducts (not shown) to the moulds 10 which are directly above the plate 16 and of supporting two chambers 18 of the mould arrangement. The chambers 18 are plenum chambers arranged to distribute air entering them to exits thereof at substantially uniform pressure. The term "plenum chamber" where used herein refers to a chamber whose exit or exits are sufficiently remote from its entrance and whose volume is sufficiently large that a substantially uniform pressure is created across the exit or exits of the chamber. Each chamber 18 extends in a horizontal plane from above one of the arms 14 and across the adaptor plate 16 beneath an associated one of the moulds 10. One of the chambers 18 extends transversely of the section while the other extends transversely away from its arm 14 and then bends around the other plenum chamber 18 to reach the adaptor plate 16 (see Figure 2).

Each of the chambers 18 is supplied with air under pressure by air supply means. The air supply means comprises blowing means in the form of a fan (not shown) which operates continuously, when the machine is in operation, to blow air into a chamber 19 formed in the interior of the frame 12 and, in particular, in the interior of the hollow arm 14. Each of the arms 14 has an opening 20 at the top thereof into which a tube 22 is telescopically received. The tube 22 serves to connect the chamber 19 to the chamber 18 and is movable to accommodate changes in the height of the chamber 18. A sealing ring 24 closes the gap between the tube 22 and the arm 14 but allows vertical movement of the tube 22 and limited sideways movement thereof. The upper end of the tube 22 has an external flange 26 which is received within the chamber 18 in a recess in a bottom wall 28 of the chamber 18.

The air supply means also comprises a valve 30 which provides valve means via which the chamber 19 communicates with the plenum chamber 18. The valve 30, therefore, acts to open or close an entrance to the plenum chamber 18.

The valve 30 is controlled by electronic control means of the machine so that it is open only during a predetermined period of each cycle of operation of the machine during which period cooling is applied to the mould 10 associated with the chamber 18. The valve 30 is a flap valve which operates to open or close the top of the tube 22. The valve 30 comprises a flap 32 which is mounted for pivoting movement about an axis 34 between a closed position (shown in solid line in Figure 1) in which the flap 32 closes the top of the tube 22 and an open position (shown in broken line in Figure 1). A spring 36 acts between an upper wall 38 of the chamber 18 and a rearward extension 40 of the flap 32 to urge the flap 32 into its open position while a diaphragm piston and cylinder arrangement is operable to move the flap 32 into its closed position by pressing downwards on an upward extension 44 of the flap 32. The diaphragm piston and cylinder arrangement comprises a piston 42 which has a head 43 which is secured by a nut 46 to a diaphragm 48 of a pneumatic cylinder 50. A pin 45 passes through the diaphgragm 48 and is recieved in a recess of the piston 42 so that the pin 45 serves to guide the motion of the piston 42. When air under pressure is introduced into the cylinder 50, the diaphragm 48 is pressed downwards taking with it the piston 42 which then presses down on the extension 44 of the flap 32. The use of a flap valve of this type operated by a diaphragm piston and cylinder arrangement saves space particularly in the vertical direction.

Above the adaptor plate 16, the tops of the two chambers 18 are closed by a common sealing plate 52 which abuts the upper walls 38. The sealing plate 52 is screwed to side walls 54 (see Figure 2) of the chambers 18 and is hence readily removable. The sealing plate 52 has passages 56 passing vertically upwards therethrough which form upwardly opening exits through which air can leave the plenum chambers 18.

Each of the moulds 10 of the first illustrative mould arrangement comprises a bottom plate 58 mounted on top of the sealing plate 52. Each bottom plate 58 has a raised section 60 with an upper surface 62 which defines a bottom portion of a cavity of the mould 10 in which molten glass is moulded in the operation of the machine. Each bottom plate 58 has an internal chamber 64 from which vacuum can be applied, in conventional manner, to the mould 10. The chamber 64 is connected, via a floating sealing member 66 located in a hole in the sealing plate 52, to a tube 68 which passes upwardly through the chamber 18 to connect the bottom plate 58 to the adpator plate 16. Vacuum can thus be applied through the tube 68 to the bottom plate 58.

Each of the moulds 10 also comprises two side portions 70 defining side portions of the mould cavity. The side portions are mounted on supporting arms 72 (only a portion of each arm 72 is shown in Figure 1). The arms 72 are movable by moving means (not shown), in conventional manner, so that each side portion is movable in a cycle of operation of the machine into a first, closed, position thereof (shown in Figure 1) in which it engages the bottom plate 58 and the other side portion to co-operate in defining the mould cavity so that moulding can take place or away from the other side portion into a second, open, position thereof in which the side portions are separated to allow moulded articles to be removed from the mould cavity. The side portions 70 move above the chambers 18 which extend in a horizontal plane beneath the side portions 70 and in particular beneath their first, closed, positions. When in their first, closed, positions, the side portions 70 engage the bottom plate 58 with the section 60 of the bottom plate 58 being received in grooves 74 in the side portions 70. When in their closed positions, the side portions 70 also engage one another and surfaces 76 thereof co-operate with the surface 62 to define the mould cavity.

The bottom plate 58 has vertical passages 78 therein with which the exits 56 through the sealing plate 52 communicate so that the cooling air flows from the exits 56 into the passages 78, the passages 78 passing vertically upwards through the bottom plate 58. These passages 78, when the side portions 70 are in their first, closed, position above the chamber 18 (see Figure 1), communicate with cylindrical longitudinal cooling passages 80 defined by the side portions 70 of the mould 10. The passages 80 each have an entrance in a bottom surface of the side portion 70 and pass upwardly through the side portion 70 so that each cooling passage 80 extends substantially in a straight line between its entrance and an exit thereof to atmosphere. Thus, cooling air flows from the passages 78 into the passages 80 and up through the passage 80. The passages 80 are distributed around the mould 10 so that air passing therethrough from the chamber 18 has a desired cooling effect on the mould 10. The passages 80 are formed by circular bores in the portion 70 and may be distributed as required to achieve the desired cooling effect. In the first illustrative mould arrangement, the passages 80 are distributed around a circle about a central axis of the mould cavity (see Figure 2), which each passage 80 being of the same diameter and extending vertically.

In the first illustrative method, the chambers 18 are provided so that each chamber extends beneath the first, closed, positions of the side portions 70 of one of the moulds 10 and so that the upwardly opening exits 56 of the chamber 18 communicate, when the side portions are in their first positions, with entrances of the cooling passages 80 in the side portions. When the side portions 70 are in their first positions, the air pressure is removed from the cylinders 50 allowing the flaps 32 to move to their open positions and air under pressure to enter the chambers 18. Thus air is blown into the chambers 18 so that, when the exits 56 communicate with the entrances of the cooling passages 80, the air is provided at substantially uniform pressure at all the entrances of the cooling passages, passes into the cooling passages, and flows therethrough cooling the side portions 70. The air supply means is arranged to create a pressure above atmospheric pressure of below 13729 Pa (2 lbs per square inch or 1400 mm of water). The air leaves the chambers 18 through the exits 56 and the passages 78 and 80 cooling the mould 10 as it passes therethrough. After a predetermined period, which may or may not be the same for each mould, air under pressure is applied to the cylinder 50 closing the flap 32 and cutting off the supply of air. The predetermined period may be varied at will to alter the cooling effect achieved. Thus, the valve means provided by the cylinder 50 and the flap 2 is used to regulate the degree of cooling of the mould 10 by varying the period during which air can pass through the exits 56, when the exits 56 are in communication with the entrances of the cooling passages 80.

Although in the first illustrative mould arrangement the sealing plate 52 has one hole 56 for each of the passages 78 and 80, in modifications of the first illustrative mould arrangement, the plate 52 may have slots which provide access for air to more than one of the passages 78 and 80 and indeed the chamber 18 may have only one exit accommodating all the passages 78 and 80. The chambers 18 are designed so that the entrance thereof is sufficiently remote from the exits thereof that a substantially uniform pressure is achieved across the entrances of the passages. The exits are upwardly facing and air leaving the chamber 18 can flow in a straight path up the passages 78 and 80 thereby reducing non-uniform air flow to a minimum.

The chambers 18 are constructed so that air is supplied to each cooling passage 80 at substantially the same pressure. To this end, the entrance of each plenum chamber 18 is sufficiently remote from the axis thereof and the volume thereof is sufficiently large to achieve this effect. It is found to be desirable if the cross-sectional area of the chamber 18 transversely to the direction of air flow therein is at least three times the combined cross-sectional areas of the cooling passages 80 supplied from the chamber. In the first illustrative mould arrangement, each chamber 18 supplies 32 cooling passages of 6 mm diameter. This gives combined cross-sectional area of 905 sq. mm. while the chamber is 37 mm high and 80 mm wide giving a cross-sectional area of 2960 sq. mm.

In the first illustrative mould arrangement, the velocity of air flow through the passages 80 is determined by the cross-sectional area and length of the passage since there are no other substantial resistances to the air flow. This makes practical the use of low pressure air which can readily be supplied by simple fans as used in conventional machines for supplying cooling stacks. Furthermore, the behaviour of the air can readily be predicted allowing accurate positioning of the passages 80.

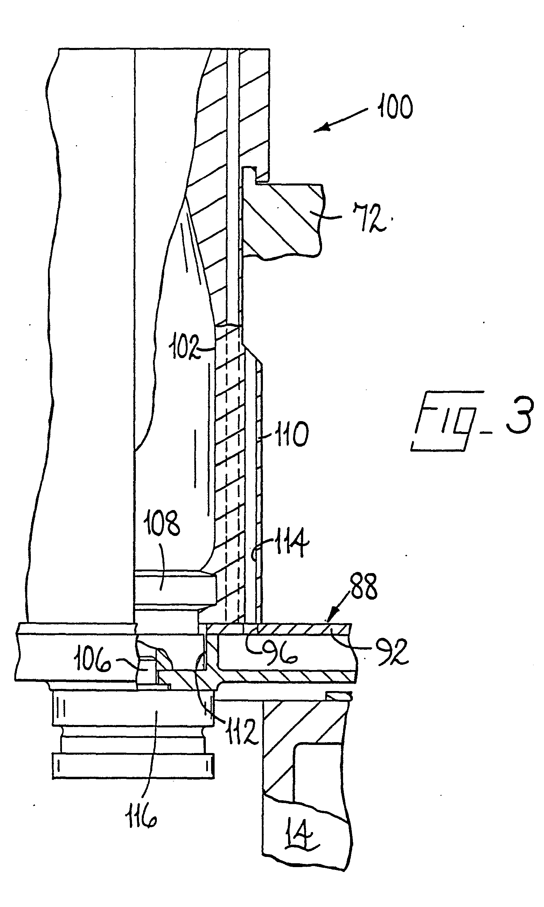

The second illustrative mould arrangement is shown in Figure 3 and comprises two moulds 100 which are of similar construction to the moulds 10 except that their bottom plates 108 do not extend beneath their side portions 110 being received in a recess 112 formed by the walls of a plenum chamber 88 which is above an adaptor plate 116. The mould 100 has a cavity 102 and a floating sealing member 106 is accommodated in the recess 112 to transmit vacuum to the bottom plate 108. The plenum chamber 88 extends in a horizontal plane beneath the side portions 110 in a sealing plate 92 thereof which, when the side portions are in their first, closed, position, communicate directly with entrances of the passages 114 in the side portions 110. If it is desired to cool the bottom plate 108 in the second illustrative mould arrangement, exits from the chamber 88 may be formed in the side wall of the chamber 88 around the recess 112 so that air may flow into cooling passages (not shown) in the bottom plate 108.

The second illustrative mould arrangement is used in the second illustrative method of cooling in which the chamber 88 is provided which extends beneath the first, closed positions of the side portions 110 so that the exits 96 communicate, when the side portions 110 are in their first positions, with entrances of cooling passages 114 in the side portions 110. The cooling passages 114 have entrances in the bottom surface of one of the side portions 110 and pass upwardly through the side portion 110. The second illustrative method also comprises blowing air into the chamber 88 so that, when the exits 96 communicate with the entrances of the cooling passages 114, air is provided at substantially uniform pressure at all the entrances, and the air passes into the cooling passages 114 and flows therethrough cooling the side portions 110.

In variations of the first and the second illustrative mould arrangements, the chamber 18 or 88 may have exits which form nozzles which direct air on to external surfaces of the side portions 70 or 110 of the mould 10 or 100. Furthermore, the valve means may not control the entrance to the chamber but instead control the exit or exits thereof. For example, a sliding plate can be provided beneath the sealing plate 52 or 92 and slide back and forth under the influence of a piston and cylinder assembly to open or close the exits 56 and 96 to the chambers 18 and 88. Furthermore, mould arrangements used in the illustrative methods may have one sealing plate per chamber and any desired number of chambers each associated with one or more moulds. If, however, each chamber is associated with one mould only, the advantage of individual control of the cooling of the mould is readily obtained. The chamber exits may also communicate with the entrances of the cooling passages when the side portions 70 or 110 are in their second, open, position rather than in their first, closed, position.

When a mould is to be changed in either the first or the second illustrative mould arrangement, this can be done without difficulty, if necessary removing the sealing plate 52 or 92 and replacing it with another having a pattern of exits 56 or 96 appropriate to the new moulds 10 or 100. If the new moulds 10 or 100 is of different height, the adaptor plate 16 or 116 is raised or lowered by raising or lowering the bottom plate mechanism, taking with it the chambers 18 or 88, with the tubes 22 sliding out of or into the arms 14.

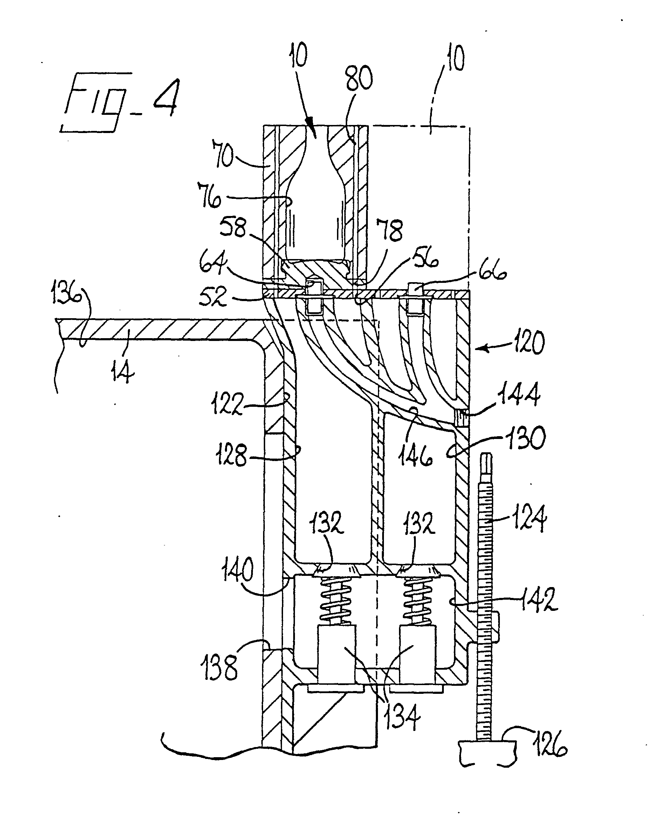

The third illustrative mould arrangement (shown in Figure 4) comprises two identical moulds 10 arranged side by side along a longitudinal axis of a section of a cyclically operating glassware forming machine of the individual section type. Each mould comprises two side portions 70 which are mounted on supporting arms (not shown), which arms are movable by moving means (not shown), in conventional manner, to move the side portions 70 of each mould towards one another into a first, closed, position thereof (shown in Figure 4) or away from one another into a second, open, position thereof to allow moulded articles to be removed from the mould 10. Each mould also comprises a bottom plate 58 which rests on a sealing plate 52. The bottom plate 58 defines a bottom portion of a cavity 76 of the mould and the two side portions 70 define side portions of the cavity 76. In their first, closed, position, the side portions 70 engage the bottom plate 58 and one another to co-operate in defining the mould cavity. The side portions 70 also define cooling passages 80 which pass upwardly through the mould side portions 70 and have entrances in a bottom surface of the side portion 70 which communicate via passages 78 in the bottom plate 58 with passages 56 through the sealing plate 52.

The sealing plate 52 forms part of a bottom plate mechanism 120 which is mounted for vertical adjustment on the machine frame 14 of the machine. Mechanism 120 is mounted in a recess 122 in the frame 14. Vertical adjustment is by means of a screw 124 threadedly received in the mechanism 120 and bearing on a horizontal surface 126.

The mechanism 120 also comprises walls which define a first plenum chamber 128 and a second plenum chamber 130. Each of the chambers 128 and 130 extends downwards in the mechanism beneath one of the moulds 10 so that air supplied to the chamber passes through the passages 56, 78, 80 and acts to cool the mould 10. At the bottom thereof each of the chambers has an entrance 132 which can be opened or closed by means of a solenoid-operated valve 134, there being one valve 134 associated with each chamber so that air can be supplied independently to the respective chambers 128 and 130. The third illustrative mould arrangement also comprises air supply means arranged to supply mould cooling air to the chambers 128 and 130 for a predetermined period in each cycle of operation of the machine during which the side portions 70 are in their first, closed, position. The air supply means comprises a fan (not shown) operable to blow air into a chamber 136 within the frame 14 which borders the recess 122 and the air enters the mechanism 120 through an entrance 140 into the chamber 142 which contains the valves 134. When the valves 134 are in their open position, air can pass from the chamber 142 into the chambers 128 and 130. Thus, each chamber 128 and 130 has an entrance 132 which receives the air supplied by the air supply means and this air comes from a vertically-extending opening 138 in the frame 14.

The bottom plate mechanism 120 also comprises a connection 144 to a source of vacuum (not shown). The connection 144 is connected to the source of vacuum by means of a flexible pipe and is connected to the bottom plates of the moulds 10 by a branched tube 146 which passes through the chambers 128 and 130 but is sealed therefrom. The branch pipe 146 communicates with a floating adaptor 66 which passes through a hole in the sealing plate and is received in a recess 64 in the bottom plate 58.

The third illustrative mould arrangement is used in the third illustrative method of cooling a mould. In the third illustrative method, the chambers 128 and 130 are provided which extend beneath the first positions of the side portions 70 so that exits 56 of the chambers communicate, when the side portions 70 are in their first, closed positions, with entrances of cooling passages 80 in the side portions 70. Each cooling passage 80 has an entrance in the bottom surface of one of the side portions 70 and passes upwardly through the side portion. The third illustrative method also comprises blowing air into the chambers 128 and 130 by means of the air supply means so that, when the exits 56 of the chambers communicate with the entrances of the cooling passages 80, air is provided at substantially uniform pressure at all the entrances, and the air passes into the cooling passages 80 and flows therethrough cooling the side portions 70.

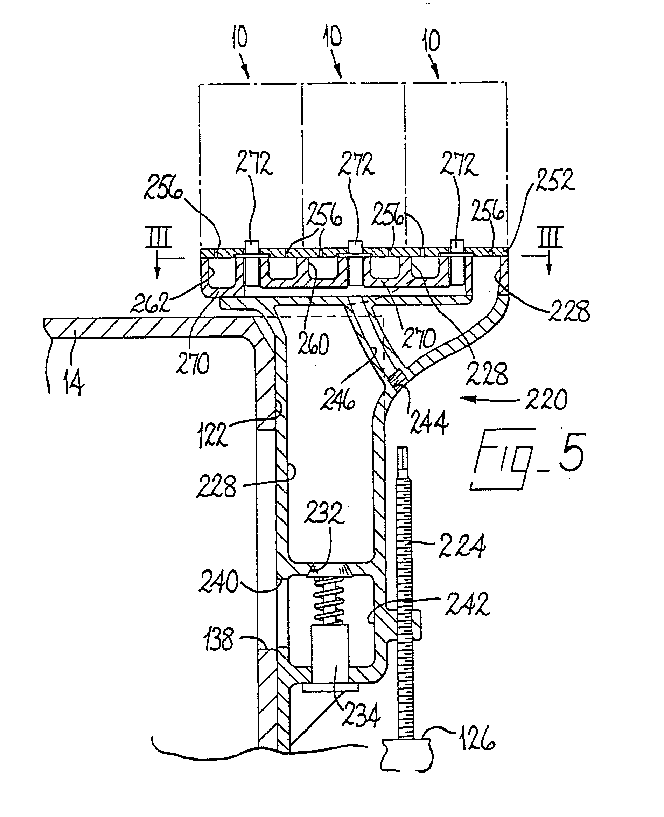

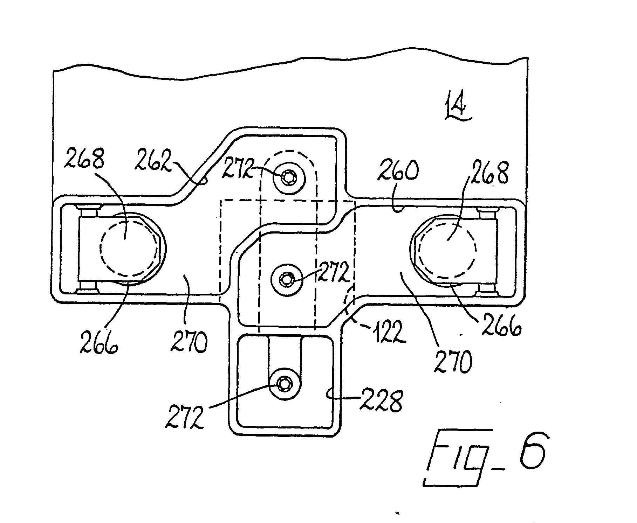

In the fourth illustrative mould arrangement, shown in Figures 5 and 6, the machine is arranged to operate in the triple gob mode. In this mode, there are three moulds 10 arranged side by side. Three moulds 10 each have a bottom plate which is mounted on top of a sealing plate 252 and side portions (not shown) which are carried by moving means similar to those of the side portions 70 and 110 of the moulds of the first, second and third illustrative mould arrangements. The sealing plate 252 forms part of a bottom plate mechanism 220 which is mounted in the recess 122 in the frame 14 instead of the bottom plate mechanism 120 of the third illustrative mould arrangement. The bottom plate mechanism 220 is mounted on a slideway in the recess 122 for vertical adjustment by means of a screw 224 which bears on the horizontal surface 126. The mechanism 220 also comprises walls which define a single plenum chamber 228 which has an entrance 240 which communicates with the opening 138 in the frame 14. A valve 234 controls entry of air into the chamber 228 through the entrance 232 from the chamber 242.

Above the top of the frame 14, two further plenum chambers 260 and 262 extend to beneath the centre mould 10 and the left hand mould (viewing Figure 5) moulds 10 respectively. These chambers 260 and 262 are constructed in a similar manner to that described in the first and second illustrative mould arrangements and each extends beneath the side portions of its respective mould and has exits 264 which, when the respective side portions are in their first closed, position, communicate with entrances of passages in the side portions of the respective moulds 10. The chambers 260 and 262 are supplied with air by air supply means through telescopic connections 266 to the interior of the frame 14 on opposite sides of the recess 122. As in the chambers of the first and the second illustrative mould arrangements, the entry of air into the chambers 260 and 262 is controlled by flap valves 268 which act to open or close the entrances to the telescopic connections 266. The bottom walls 270 of the chambers 260 and 262 overlie the chamber 228 and prevent it from communicating with the left hand and central moulds 10.

The chamber 228 extends to beneath the right hand (viewing Figure 5) mould 10 which has exits 256 which, when the side portions of the right hand mould 10 are in their closed position, communicate with passages in those side portions so that air can enter those passages. The bottom plate mechanism 220 also comprises a connection 244 to a source of vacuum (not shown). The connection 244 is connected by a pipe 246 which passes through the chamber 228 and is connected to the bottom plate of the three moulds 10 by branches passing upwardly through the chambers 262, 260 and 228. Each of the branches of the pipe 246 terminates with an adaptor 272 which enters the bottom plate of the respective mould 10.

The fourth illustrative mould arrangement is used in the fourth illustrative method of cooling a mould of a cyclically operating glassware forming machine. In this method, the chambers 228, 260 and 262 are provided which each extend beneath the first position of the side portions of a mould so that exits 256 of the chambers communicate, when the side portions are in their first positions, with entrances of cooling passages in the side portions. Each cooling passage, as in the first, second and third illustrative mould arrangements having its entrance in the bottom surface of one of the side portions and passing upwardly through the side portion. The fourth illustrative method also comprises blowing air into the chambers 228, 260 and 262 so that, when the exits 256 of the chambers communicate with the entrances of the cooling passages, the air passes into the cooling passages and flows therethrough cooling the side portions.

## Claims

1. A method of cooling a mould of a cyclically operating glassware forming machine, the mould comprising a bottom plate defining a bottom portion of a cavity of the mould in which molten glass is moulded in the operation of the machine, and two side portions defining side portions of the cavity, each side portion being movable in a cycle of operation of the machine between mould-open and mould-closed positions thereof, the side portions defining cooling passages passing upwardly through the side portions characterised in that said cooling passages are constructed to pass straight upwardly through the side portions from entrances in the bottom surfaces of the side portions and that air at substantially uniform pressure is provided at all said entrances to the cooling passages when the side portions are in their closed and/or their open positions, so that the air passes into the cooling passages and flows therethrough cooling the side portions, whereby a consistent and predictable cooling effect is achieved.

2. A method according to Claim 1, characterised in that the air is provided for an adjustable time while the side portions are in their closed and/or open positions whereby the cooling effect is adjusted.

3. A method according to either one of Claims 1 and 2, characterised in that the substantially uniform pressure is below 13729 Pa (2 lbs per square inch or 1400 mm of water).

4. A method according to Claim 3, characterised in that the valve means is used to regulate the degree of cooling of the mould by varying the period during which air can pass through the exit or exits when the exit or exits are in communication with the entrances of the cooling passages.

5. A method according to any one of Claims 1 to 4, characterised in that the uniform pressure is provided in a plenum chamber arranged to have a cross-sectional area transversely to the direction of air flow therein of at least three times the combined cross-sectional areas of the cooling passages supplied from the chamber.

6. A method according to Claim 5 characterised in that the plenum chamber extends beneath the first position of both side portions of the mould and has exits which communicate with the entrances of the cooling passages in both side portions of the mould.

## Patentansprüche

1. Verfahren zum Kühlen einer Form einer Glasformmaschine mit periodischer Betriebsweise, wobei die Form eine Bodenplatte, welche einen Bodenabschnitt eines Hohlraumes der Form definiert, in welcher geschmolzenes Glas im Betrieb der Maschine geformt wird, und zwei Seitenabschnitte umfaßt, welche Seitenabschnitte des Hohlraumes definieren, wobei jeder Seitenabschnitt in einen Betriebszyklus der Maschine zwischen einer Formoffen- und Formschließlage bewegbar ist, und wobei die Seitenabschnitte Kühldurchgänge definieren, die sich aufwärts durch die Seitenabschnitte erstrekken, dadurch gekennzeichnet, daß die Kühldurchgänge so ausgebildet sind, daß sie gerade aufwärts durch die Seitenabschnitte von Eingängen in den Bodenflächen der Seitenabschnitte führen und daß Luft mit im wesentlichen gleichmäßigem Druck an allen Eingängen zu den Kühldurchgängen vorhanden ist, wenn sich die Seitenabschnitte in ihrer Schließ- und/oder Offenlage befinden, so daß die Luft in die Kühldurchgänge durch sie strömt und die Seitenabschnitte kühlt, so daß ein bleibender und voraussehbarer Kühleffekt erreicht wird.

2. Verfahren nach Anspruch 1, dadurch gekennzeichnet, daß die Luft während einer einstellbaren Zeit vorgesehen wird, während die Seitenabschnitte sich in ihrer Schließ- und/oder Offenlage befinden, so daß der Kühleffekt einstellbar ist.

3. Verfahren nach einem der Ansprüche 1 bis 2, dadurch gekennzeichnet, daß der im wesentlichen gleichmäßige Druck unter 13729 Pa oder 1400 mm $H_2O$ liegt.

4. Verfahren nach Anspruch 3, dadurch gekennzeichnet, daß eine Ventileinrichtung zum Regeln des Kühlgrades der Form durch Variieren der Periode verwendet wird, während welcher Luft durch den Ausgang oder die Ausgänge strömen kann, wenn der Ausgang oder die Ausgänge in Verbindung mit den Eingängen der Kühldurchgänge ist bzw. sind.

5. Verfahren nach einem der Ansprüche 1 bis 4, dadurch gekennzeichnet, daß der gleichmäßige Druck in einer Luftkammer vorgesehen wird, die so angeordnet ist, daß sie einen quer zur Luftströmungsrichtung liegenden Querschnittsbereich aufweist, der wenigstens das Dreifache der kombinierten Querschnittsbereiche der von der Kammer belieferten Kühldurchgänge ausmacht. .

6. Verfahren nach Anspruch 5, dadurch gekennzeichnet, daß sich die Luftkammer unterhalb der ersten Lage beider Seitenabschnitte der Form erstreckt und Ausgänge aufweist, die mit den Eingängen der Kühldurchgänge in beiden Seitenabschnitten der Form in Verbindung stehen.

**Revendications**

1. Procédé de refroidissement d'un moule d'une machine à mouler le verre à fonctionnement cyclique, le moule comprenant une plaque de fond définissant une portion de fond d'une cavité du moule dans laquelle du verre fondu est moulé dans le fonctionnement de la machine, et deux portions latérales définissant des portions latérales de la cavité, chaque portion latérale pouvant se déplacer dans un cycle de travail de la machine entre les positions de moule fermé et de moule ouvert, les portions latérales définissant des passages de refroidissement qui s'élèvent à travers les portions latérales, caractérisé en ce que lesdits passages de refroidissement s'élèvent en ligne droite à travers les portions latérales à partir d'entrées dans les surfaces de fond des portions latérales, et en ce que de l'air est fourni à une pression à peu près uniforme à toutes lesdites entrées donnant dans les passages de refroidissement lorsque les portions latérales sont dans leur position fermée et/ou dans leur position ouverte, de sorte que l'air pénètre dans les passages de refroidissement et circule dans ces passages en refroidissant les portions latérales, de sorte qu'on obtient un effet de refroidissement uniforme et prévisible.

2. Procédé selon la revendication 1, caractérisé en ce que l'air est fourni pendant un temps réglable pendant que les portions latérales sont dans leur position fermée et/ou dans leur position ouverte, de sorte que l'effet de refroidissement est ainsi réglé.

3. Procédé selon l'une ou l'autre des revendications 1 et 2, caractérisé en ce que la pression à peu près uniforme est inférieure à 13 729 Pa (2 livres par pouce carré ou 1 400 mm de hauteur d'eau).

4. Procédé selon la revendication 3, caractérisé en ce que les moyens obturateurs sont utilisés pour régler le degré de refroidissement du moule en faisant varier la période pendant laquelle de l'air peut passer à travers la sortie ou les sorties, lorsque la sortie ou les sorties sont en communication avec les entrées des passages de refroidissement.

5. Procédé selon une quelconque des revendications 1 à 4, caractérisé en ce que la pression uniforme est fournie à une chambre de tranquillisation agencée pour posséder une aire de section, mesurée transversalement à la direction de la circulation de l'air dans cette chambre, au moins égale à trois fois la somme des aires de section des passages de refroidissement alimentés à partir de la chambre.

6. Procédé selon la revendication 5, caractérisé en ce que la chambre de tranquillisation s'étend au-dessous de la première position des deux portions latérales du moule et possède des sorties qui communiquent avec les entrées des passages de refroidissement formés dans les deux portions latérales du moule.

Fig_1

EP 0 167 871 B1

Fig- 2

100

72

102

110

108

114

88

92

96

106

112

116

14

$Fig\_3$

_Fig_4

Fig_5

Fig_6